# EUROPÄISCHE PATENTSCHRIFT

(11) **EP 2 122 165 B1**
(45) Veröffentlichungstag und Bekanntmachung des Hinweises auf die Patenterteilung: **01.02.2017**
(21) Anmeldenummer: 07856400.2
(22) Anmeldetag: 06.12.2007
(51) Int. Cl.: F03G 7/04, F24J 3/08

(54) **VERFAHREN UND EINE VORRICHTUNG ZUR DAMPFERZEUGUNG IN DAMPFKRAFTWERKEN**
METHOD AND A DEVICE FOR THE GENERATION OF STEAM IN STEAM POWER PLANTS, WHEREIN COLD CONDENSATE AND/OR COMBUSTION AIR IS PREHEATED BEFORE THE GENERATION OF STEAM
PROCÉDÉ ET DISPOSITIF DE PRODUCTION DE VAPEUR DANS DES CENTRALES THERMIQUES À VAPEUR, AVEC PRÉCHAUFFAGE DU CONDENSAT FROID ET/OU DE L'AIR DE COMBUSTION AVANT LA PRODUCTION DE VAPEUR

(30) Priorität: 14.12.2006 DE 102006060250
(43) Veröffentlichungstag der Anmeldung: 25.11.2009
(73) Patentinhaber: EnBW Energie Baden-Württemberg AG, 76180 Karlsruhe (DE)
(72) Erfinder: GÖTTLICHER, Gerold, 67098 Bad Dürkheim (DE); WAUSCHKUHN, Arnim, 70619 Stuttgart (DE); BUBECK, Hans, 70327 Stuttgart (DE); EBERT, Konrad, 73765 Neuhausen (DE); ELZE, Nikolaus, 70192 Stuttgart (DE)
(74) Vertreter: DREISS Patentanwälte PartG mbB
(86) Internationale Anmeldenummer: PCT/EP2007/010594
(87) Internationale Veröffentlichungsnummer: WO 2008/071333

(56) Entgegenhaltungen:
- DE-A1-102004 014 878
- DE-A1-102004 048 932
- US-A- 3 950 949
- US-A- 5 272 879
- US-A- 5 311 741
- US-A1- 2006 137 349

## Beschreibung

Die Erfindung betrifft ein Verfahren und eine Vorrichtung zur Dampferzeugung in Dampfkraftwerken, bei dem kaltes Kondensat und/oder Verbrennungsluft vor der Dampferzeugung vorgewärmt wird bzw. werden.

Moderne Dampfkraftwerke, die mit fossilen Brennstoffen wie Kohle, Gas oder Öl befeuert werden, erreichen hohe Wirkungsgrade unter anderem durch hohe Dampftemperaturen. Bei kleinen Anlagen oder Anlagen mit Problembrennstoffen wie z.B. Hausmüll liegen diese bei ca. 400°C, bei Kohlekraftwerken heute bis zu 620°C und zukünftig noch darüber.

Geothermische Wärme kann dagegen nur wesentlich niedrigere Temperaturen erreichen (in Deutschland z.B. ab ca. 100°C und mit hohem Aufwand bis in die Nähe von maximal 250°C). Zudem sind die Wärmeleistungen aus geothermischen Quellen im Vergleich zu großen Kohlekraftwerken sehr gering. Dieses niedrigere Temperaturniveau bedeutet, dass mit Geothermie auch nur niedrigere Wirkungsgrade erreicht werden können und die Kraftwerke bezogen auf die elektrische Leistung sehr teuer werden.

Für die Wirtschaftlichkeit der Stromerzeugung durch Geothermie ist ein effizienter Energiewandlungsprozess sehr wichtig. Die DE 10 2004 014 878 A1 schlägt vor, mit der geothermischen Energie das Kondensat vorzuwärmen. Aus der US 4,069,674 ist ein Kraftwerk bekannt, bei dem in einem Abzweig Speisewasser mit solarer Energie vorgeheizt wird. Die US 5,272,879 A zeigt darüber hinaus ein ORC-Kraftwerk, bei dem unterschiedliche alternative Energien zum Antreiben einer Turbine verwendet werden.

Der Erfindung liegt die Aufgabe zugrunde, ein Verfahren und/oder eine Vorrichtung zur Dampferzeugung bereit zu stellen, die einen höheren Wirkungsgrad aufweist.

Diese Aufgabe wird mit einem Verfahren und/oder einer Vorrichtung gelöst, die die Merkmale des Anspruchs 1 oder des Anspruchs 8 aufweisen.

Geothermisch erzeugte Wärme wird in ein fossil befeuertes oder atomar betriebenes Dampfkraftwerk eingespeist, um dort zusätzliche elektrische Leistung zu erzeugen oder Brennstoff einzusparen. Die geothermische Wärme wird über Wärmetauscher zur Vorwärmung von Speisewasser und/oder Verbrennungsluft genutzt. Diese Vorwärmung geschieht in einem separaten Strang, der parallel zur konventionellen Vorwärmungsstrecke liegt. Die geothermisch beheizte Vorwärmstrecke besteht aus mindestens zwei Wärmetauschern. Zunächst wird die geothermische Wärme zur Aufheizung des Speisewassers bzw. der Verbrennungsluft von einer niedrigen Temperatur auf eine möglichst hohe Temperatur genutzt und dabei der Wärmeträger der geothermischen Wärme möglichst weit abgekühlt. Anschließend wird das geothermisch vorgewärmte Speisewasser bzw. die geothermisch vorgewärmte Verbrennungsluft durch einen nachgeschalteten Vorwärmer oder eine Vorwärmergruppe in konventioneller Weise durch Wärmezufuhr aus dem konventionellen Prozess, z.B. Heizdampf, auf die gleiche Prozesstemperatur der nächst möglichen Einspeisestelle aufgeheizt. Damit kann gewährleistet werden, dass die geothermische Wärme optimal bis auf die höchst mögliche Temperatur genutzt wird und gleichzeitig die Mischungsverluste durch Abkühlen beim nachfolgenden Einmischen in die konventionelle Vorwärmstrecke minimiert werden. Diese Methode beschreibt somit eine energetisch optimierte Geothermienutzung bei der Kombination mit Dampfkraftwerken.

In Dampfkraftwerken kann durch Vorwärmung mit geothermischer Niedertemperaturwärme die energetische Nutzung des eingesetzten Brennstoffs zu einer höheren Mitteltemperatur der Wärmeübertragung verschoben werden und bewirkt dadurch eine Wirkungsgradverbesserung. Auf diese Weise wird für die Nutzung der Geothermie kein eigenes, wenig effizientes und teures Kraftwerk erforderlich, sondern nur die Einbindung der geothermischen Wärme in die Vorwärmstrecke des Kraftwerkes vor der Dampferzeugung bei hoher Temperatur aus der höherwertigen chemischen Energie des Brennstoffs. Zudem bietet die Nutzung zur Vorwärmung das Potenzial, dass der geothermische Wärmeträger weiter abgekühlt werden kann als bei einem eigenständigen Geothermiekraftwerk und erhöht somit die Effizienz der geothermischen Stromerzeugung bzw. die Stromausbeute aus der geothermischen Wärmequelle.

Dabei wird Wärme zur Vorwärmung des Teilstroms eingespart, die z.B. durch eingesparten Entnahmedampf einen höheren Dampfmassenstrom im Niederdruckteil der Turbine ermöglicht und was so zu einer zusätzlichen Turbinenleistung führt.

Durch die vorgeschlagene Methode kann zudem der konventionelle Prozess eines Dampfkraftwerkes in seiner Auslegung ohne wesentliche Änderung verbleiben. Dies bedeutet aber auch, dass konventionelle Dampfkraftwerke mit der erfindungsgemäßen geothermischen Vorwärmungsstrecke nachgerüstet werden können.

Die geothermische Wärme wird auf ein optimal geeignetes Wärmeträgermedium übertragen, das in einer Rohrleitung transportiert wird und in einem Wärmeübertrager seine Wärme an das vorzuwärmende Speisewasser bzw. an die vorzuwärmende Verbrennungsluft abgibt.

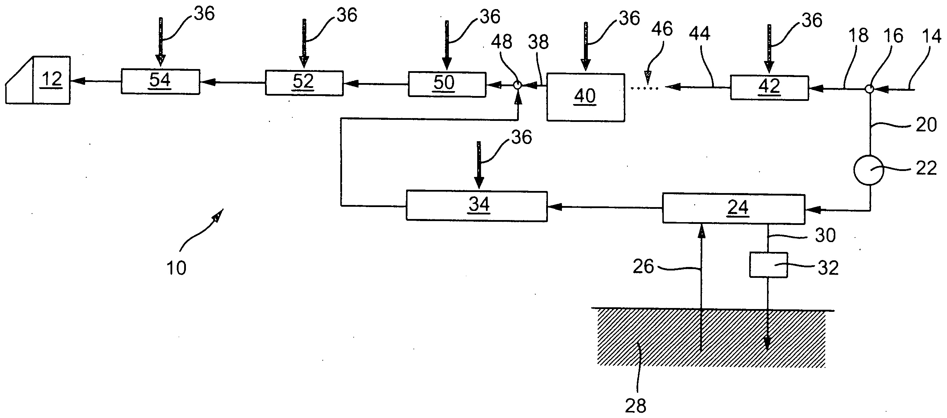

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

Die Erfindung soll an Hand einer Vorwärmungsstrecke für kaltes Kondensat erläutert werden, was aber nicht einschränkend verstanden werden soll. An Stelle des kalten Kondensats oder zusätzlich zum kalten Kondensat kann auch Verbrennungsluft erwärmt werden.

Die Zeichnung zeigt eine insgesamt mit 10 bezeichnete Vorwärmungsstrecke, mit der kaltes Kondensat oder Speisewasser eines lediglich andeutungsweise dargestellten Dampfkraftwerkes 12 über mehrere Stufen vorgewärmt wird.

Der Vorwärmstrecke 10 wird bei 14 Speisewasser oder kaltes Kondensat von einem Dampfturbinenkondensator zugeführt. Im kältesten Bereich der Vorwärmstrecke 10, das heißt unmittelbar nach der Zuführung 14, befindet sich eine Abzweigung 16, in der das kalte Kondensat in einen ersten Teilstrom 18 und einen zweiten Teilstrom 20 aufgeteilt wird, wobei der zweite Teilstrom 20 zwischen 0% und 100% des Hauptstroms 14 betragen kann. In der Regel ist der zweite Teilstrom 20 ein konstanter Massenstrom. Unmittelbar nach der Abzweigung 16 befindet sich im zweiten Teilstrom 20 eine optionale Speisewasserpumpe 22, welcher ein Wärmetauscher 24 für Geothermie folgt. Dieser Wärmetauscher 24 arbeitet im Gegenstromprinzip und ist bevorzugt als Plattenwärmetauscher ausgebildet. Andere Wärmetauscher sind denkbar. Der Wärmetauscher 24 wird von einem heißen geothermischen Wärmeträger 26 durchströmt, welcher eine im Erdreich sich befindende Wärmequelle 28 durchströmt. Im Rücklauf 30 befindet sich ein optionaler Wärmetauscher 32, mit dem zusätzlich Verbrennungsluft erwärmt werden kann.

Dem Wärmetauscher 24 schließt sich ein konventioneller Wärmetauscher 34 an, mit welchem das im Wärmetauscher 24 zum Beispiel 32,7°C auf 85,0°C erwärmte Kondensat zusätzlich nachgeheizt wird. Als Wärmezufuhr wird zum Beispiel Heizdampf 36 verwendet. In diesem nachgeschalteten Wärmetauscher 34 wird das vorgewärmte Kondensat auf eine Temperatur erwärmt, die möglichst exakt der Temperatur entspricht, die das Kondensat 38 im ersten Teilstrom 18 besitzt, wenn es einen Vorwärmer 40 verlässt, zum Beispiel auf 98,7°C.

Der dazu parallele erste Teilstrom 18 des Kondensats durchströmt zunächst einen Vorwärmer 42, welcher ebenfalls mit Heizdampf 36 versorgt wird. Das den Vorwärmer 42 verlassende Kondensat 44 besitzt zum Beispiel eine Temperatur von 75,4°C und kann weitere Vorwärmer 46 durchströmen, die in der Zeichnung lediglich mit Punkten dargestellt sind. In diesem Abschnitt kann auch eine Speisewasserpumpe und/oder ein Speisewassertank vorgesehen sein. Sodann strömt das Kondensat 44 in den Vorwärmer 40 und wird, wie bereits erwähnt, mittels des Heizdampfes 36 auf 98,7°C erwärmt. Dabei ist erfindungswesentlich, dass in der Zumischstelle 48 die Temperaturen der beiden Teilströme 18 und 20 gleich sind, wodurch Mischungsverluste vermieden werden.

Die Einspeisung des zweiten Teilstroms 20 erfolgt also hinter einem Vorwärmer, zum Beispiel dem Vorwärmer 40, bei dem folgendes gilt:
a. der erste Teilstrom 18 besitzt eine Zulauftemperatur, die unterhalb der Temperatur des zweiten Teilstroms 20 am Ausgang des Wärmetauschers 24 liegt, und
b. die Temperatur des ersten Teilstroms 18 am Ausgang des Vorwärmers liegt oberhalb der Temperatur des zweiten Teilstroms 20 am Ausgang des Wärmetauschers 24.

Diese Temperaturdifferenz wird mit dem zweiten Wärmetauscher 34 ausgeglichen.

Dieser Zumischstelle 48 können weitere Vorwärmer 50, 52 und 54 folgen, in denen das Speisewasser zum Beispiel auf Temperaturen von 118,8°C am Ausgang des Vorwärmers 50, auf 138,7°C am Ausgang des Vorwärmers 52 und auf 158,1°C am Ausgang des Vorwärmers 54 aufgewärmt wird. Die Vorwärmer 50 bis 54 werden ebenfalls mit Heizdampf 36 betrieben. Außerdem können in dieser Strecke ein oder mehrere Speisewassertanks und ein oder mehrere Speisewasserpumpen vorgesehen sein.

Selbstverständlich kann an Stelle des kalten Kondensats auch Verbrennungsluft vorgewärmt werden, indem ein Teilstrom dieser Verbrennungsluft abgezweigt und über einen geeigneten Luftvorwärmer mittels geothermischer Wärme vorgewärmt wird. Dabei muss beachtet werden, dass dem geothermischen Wärmeträger 26 die maximale Energie entzogen wird, wobei die auf diese Weise vorgewärmte Verbrennungsluft dann anschließend über einen weiteren Luftvorwärmer auf eine Temperatur nachgeheizt wird, die der in der Zumischstelle herrschenden Temperatur des Reststromes entspricht, wodurch ebenfalls Mischungsverluste vermieden werden.

Für die optimale Nutzung der Geothermie ist im zweiten Teilstrom 20 eine Regelung des Massenstroms vorgesehen, so dass dem geothermischen Wärmeträger die maximale Energie entzogen werden kann. Eine weitere Regelung erfolgt im Wärmetauscher 34, über welchen die Temperatur des zweiten Teilstroms 20 an die Temperatur des ersten Teilstroms 18 in der Zumischstelle 48 angeglichen wird.

Mit einem derartigen Verfahren sowie mit einer derartigen Vorrichtung kann lediglich durch Schaffen einer Abzweigung 16 sowie einer Zumischstelle 48 und die Entnahme von Heizdampf 36 an einer herkömmlichen Vorwärmstrecke der Wirkungsgrad des Kraftwerks erhöht werden. Somit kann der die geothermische Vorwärmung betreffende Abschnitt problemlos zugebaut beziehungsweise nachgerüstet werden.

## Patentansprüche

1. Verfahren zur Dampferzeugung in einem Dampfkraftwerk (12), bei dem kaltes Kondensat und/oder Verbrennungsluft vor der Dampferzeugung vorgewärmt wird, wobei ein Teil (18) des kalten Kondensats oder der Verbrennungsluft mittels eines oder mehrerer Vorwärmer (40, 42, 50, 52, 54) herkömmlich vorgewärmt wird, **dadurch gekennzeichnet, dass** ein Teil (20) des kalten Kondensats oder der Verbrennungsluft mittels geothermischer Energie vorgewärmt wird.

2. Verfahren nach Anspruch 1, **dadurch gekennzeichnet, dass** der geothermisch vorgewärmte Teil (20) des Kondensats oder der Verbrennungsluft in einem zusätzlichen Wärmetauscher (34) nachgeheizt wird.

3. Verfahren nach Anspruch 2, **dadurch gekennzeichnet, dass** der zusätzliche Wärmetauscher (34) mit Heizdampf (36) beheizt wird.

4. Verfahren nach einem der vorhergehenden Ansprüche, **dadurch gekennzeichnet, dass** der geothermisch vorgewärmte Teil (20) des Kondensats oder die geothermisch vorgewärmte Verbrennungsluft in die herkömmliche Vorwärmstrecke in einem Abschnitt zugespeist wird, in dem der herkömmlich vorgewärmte Teil (18) die gleiche oder eine höhere Temperatur aufweist, wie der geothermisch vorgewärmte Teil (20) nach dem Wärmetauscher (24).

5. Verfahren nach einem der vorhergehenden Ansprüche, **dadurch gekennzeichnet, dass** für die geothermische Vorwärmung ein Gegenstrom- oder Kreuzstromwärmetauscher (24) verwendet wird.

6. Verfahren nach einem der vorhergehenden Ansprüche, **dadurch gekennzeichnet, dass** für die geothermische Vorwärmung ein Plattenwärmetauscher (24) oder Luftvorwärmer verwendet wird.

7. Verfahren nach einem der vorhergehenden Ansprüche, **dadurch gekennzeichnet, dass** der geothermische Wärmeträger nach dem Wärmetausch mit dem Kondensat zur Vorwärmung der Verbrennungsluft in einem Wärmetauscher (32) verwendet wird.

8. Verfahren nach einem der vorhergehenden Ansprüche, **dadurch gekennzeichnet, dass** in der Vorwärmstrecke (20) für die geothermische Vorwärmung das geothermisch vorgewärmte Kondensat oder die geothermisch vorgewärmte Verbrennungsluft mittels einer zusätzlichen Speisepumpe (22) oder einem Gebläse gefördert wird.

9. Dampfkraftwerk (12) mit einer kaltes Kondensat oder Verbrennungsluft vorwärmenden Vorwärmstrecke (10), **dadurch gekennzeichnet, dass** die Vorwärmstrecke (18) einen parallel verlaufenden Abzweig (20) aufweist, und dass in diesem Abzweig ein geothermischer Wärmetauscher (24) für einen Teil des vorzuwärmenden Kondensats oder der Verbrennungsluft angeordnet ist.

10. Dampfkraftwerk nach Anspruch 9, **dadurch gekennzeichnet, dass** in dem Abzweig (20) dem geothermischen Wärmetauscher (24) eine Nachheizung (34) nachgeschaltet ist.

11. Dampfkraftwerk nach Anspruch 10, **dadurch gekennzeichnet, dass** die Nachheizung (34) nicht geothermisch beheizt ist.

12. Dampfkraftwerk nach einem der Ansprüche 9 bis 11, **dadurch gekennzeichnet, dass** in den beiden parallel verlaufenden Abschnitten (18 und 20) der Vorwärmstrecke (10) das jeweils vorgewärmte Kondensat oder die Verbrennungsluft vor der Zumischung (48) gleiche Temperaturen aufweisen.

13. Dampfkraftwerk nach einem der Ansprüche 9 bis 12, **dadurch gekennzeichnet, dass** für den geothermischen Wärmeträger nach dem geothermischen Wärmetauscher (24) für das Kondensat ein Vorwärmer (32) für Verbrennungsluft nachgeschaltet ist.

## Claims

1. A method for steam generation in a steam power plant (12), in which cold condensate and/or combustion air is pre-heated prior to the steam generation, and a portion (18) of the cold condensate or combustion air is conventionally pre-heated by means of one or more preheaters (40, 42, 50, 52, 54), **characterized in that** a portion (20) of the cold condensate or combustion air is pre-heated by means of geothermal energy.

2. The method of claim 1, **characterized in that** the geothermally pre-heated portion (20) of the condensate or combustion air is postheated in an additional heat exchanger (34).

3. The method of claim 2, **characterized in that** the additional heat exchanger (34) is heated by hot steam (36).

4. The method of one of the foregoing claims, **characterized in that** the geothermally pre-heated portion (20) of the condensate, or the geothermally pre-heated combustion air, is fed into the conventional pre-heating line in a portion in which the conventionally pre-heated portion (18) has the same or a higher temperature as the geothermally pre-heated portion (20) downstream of the heat exchanger (24).

5. The method of one of the foregoing claims, **characterized in that** for the geothermal pre-heating, a countercurrent or cross-current heat exchanger (24) is used.

6. The method of one of the foregoing claims, **characterized in that** for the geothermal pre-heating, a plate heat exchanger (24) or air pre-heater is used.

7. The method of one of the foregoing claims, **characterized in that** the geothermal heat transfer medium downstream of the heat exchange having the condensate is used for pre-heating the combustion air in a heat exchanger (32).

8. The method of one of the foregoing claims, **characterized in that** in the pre-heating line (20) for the geothermal pre-heating, the geothermally pre-heated condensate or the geothermally pre-heated combustion air is fed by means of an additional feed pump (22) or a blower.

9. A steam power plant (12) having a pre-heating line (10) that pre-heats cold condensate or combustion air, **characterized in that** the pre-heating line (18) has a branch (20) extending in parallel; and that a geothermal heat exchanger (24) for a portion of the condensate or combustion air to be pre-heated is located in this branch.

10. The steam power plant of claim 9, **characterized in that** in the branch (20), a post-heater (34) is connected downstream of the geothermal heat exchanger (24).

11. The steam power plant of claim 10, **characterized in that** the post-heater (34) is not geothermally heated.

12. The steam power plant of one of claims 9 through 11, **characterized in that** in both of the parallel-extending portions (18 and 20) of the pre-heating line (10), either the pre-heated condensate or the pre-heated combustion air, before they are admixed (48), have the same temperatures.

13. The steam power plant of one of claims 9 through 12, **characterized in that** for the geothermal heat transfer medium downstream of the geothermal heat exchanger (24) for the condensate, a pre-heater (32) for combustion air is connected downstream.

## Revendications

1. Procédé de production de vapeur dans une centrale thermique à vapeur (12), dans lequel du condensat froid et/ou de l'air de combustion est préchauffé avant la production de vapeur, dans lequel une partie (18) du condensat froid ou de l'air de combustion est préchauffée de manière classique au moyen d'un ou de plusieurs préchauffeur(s) (40, 42, 50, 52, 54), **caractérisé par le fait qu'**une partie (20) du condensat froid ou de l'air de combustion est préchauffée au moyen d'énergie géothermique.

2. Procédé selon la revendication 1, **caractérisé par le fait que** la partie (20) préchauffée de façon géothermique du condensat ou de l'air de combustion est réchauffée dans un échangeur de chaleur (34) supplémentaire.

3. Procédé selon la revendication 2, **caractérisé par le fait que** ledit échangeur de chaleur (34) supplémentaire est chauffé au moyen de vapeur de chauffage (36).

4. Procédé selon l'une quelconque des revendications précédentes, **caractérisé par le fait que** la partie (20) préchauffée de façon géothermique du condensat ou l'air de combustion préchauffé de façon géothermique est ajouté(e) dans la section de préchauffage classique dans un tronçon dans lequel la partie (18) préchauffée de manière classique présente la même température ou une température plus élevée que la partie préchauffée de façon géothermique (20) en aval de l'échangeur de chaleur (24).

5. Procédé selon l'une quelconque des revendications précédentes, **caractérisé par le fait que** l'on utilise un échangeur de chaleur à contre-courant ou à courants croisés (24) pour le préchauffage géothermique.

6. Procédé selon l'une quelconque des revendications précédentes, **caractérisé par le fait que** l'on utilise un échangeur de chaleur à plaques (24) ou un réchauffeur d'air pour le préchauffage géothermique.

7. Procédé selon l'une quelconque des revendications précédentes, **caractérisé par le fait que** le fluide caloporteur géothermique est utilisé après l'échange de chaleur avec le condensat pour préchauffer l'air de combustion dans un échangeur de chaleur (32).

8. Procédé selon l'une quelconque des revendications précédentes, **caractérisé par le fait que**, dans la section de préchauffage (20) pour le préchauffage géothermique, le condensat préchauffé de façon géothermique ou l'air de combustion préchauffé de façon géothermique est refoulé au moyen d'une pompe supplémentaire d'alimentation (22) ou d'un ventilateur.

9. Centrale thermique à vapeur (12) comprenant une section de préchauffage (10) préchauffant du condensat froid ou de l'air de combustion, **caractérisée par le fait que** la section de préchauffage (18) présente une branche (20) s'étendant parallèlement et que dans cette branche est disposé un échangeur de chaleur géothermique (24) pour une partie du condensat ou de l'air de combustion à préchauffer.

10. Centrale thermique à vapeur selon la revendication 9, **caractérisée par le fait que**, dans ladite branche (20), un dispositif de post-chauffage (34) est monté en aval de l'échangeur de chaleur géothermique (24).

11. Centrale thermique à vapeur selon la revendication 10, **caractérisée par le fait que** le dispositif de post-chauffage (34) n'est pas chauffé de façon géothermique.

12. Centrale thermique à vapeur selon l'une quelconque des revendications 9 à 11, **caractérisée par le fait que**, dans les deux tronçons (18 et 20) s'étendant parallèlement de la section de préchauffage (10), le condensat ou l'air de combustion respectivement préchauffé présentent les mêmes températures avant d'être ajouté en mélangeant (48).

13. Centrale thermique à vapeur selon l'une quelconque des revendications 9 à 12, **caractérisée par le fait que**, pour le fluide caloporteur géothermique, un préchauffeur (32) pour de l'air de combustion est monté en aval de l'échangeur de chaleur géothermique (24) pour le condensat.
